# EUROPÄISCHE PATENTSCHRIFT

(11) **EP 2 057 393 B1**
(45) Veröffentlichungstag und Bekanntmachung des Hinweises auf die Patenterteilung: **08.10.2014**
(21) Anmeldenummer: 07802708.3
(22) Anmeldetag: 20.08.2007
(51) Int. Cl.: F16H 61/30, F16H 61/12

(54) **HYDRAULISCHE ODER PNEUMATISCHE STEUERUNGSEINRICHTUNG EINES AUTOMATISIERTEN SCHALTGETRIEBES**
HYDRAULIC OR PNEUMATIC CONTROL DEVICE OF AN AUTOMATED SHIFT TRANSMISSION
DISPOSITIF DE COMMANDE HYDRAULIQUE OU PNEUMATIQUE D'UNE BOÎTE AUTOMATIQUE

(30) Priorität: 29.08.2006 DE 102006040476
(43) Veröffentlichungstag der Anmeldung: 13.05.2009
(73) Patentinhaber: ZF Friedrichshafen AG, 88038 Friedrichshafen (DE); KNORR-BREMSE Systeme für Nutzfahrzeuge GmbH, 80809 München (DE)
(72) Erfinder: PETZOLD, Rainer, 88045 Friedrichshafen (DE); STEINBORN, Mario, 88046 Friedrichshafen (DE); DEEG, Markus, 71735 Eberdingen (DE); ROETHER, Friedbert, 74389 Cleebronn (DE)
(86) Internationale Anmeldenummer: PCT/EP2007/058609
(87) Internationale Veröffentlichungsnummer: WO 2008/025693

(56) Entgegenhaltungen:
- EP-A- 1 150 040
- DE-A1- 10 131 853
- DE-A1- 19 931 973
- US-A1- 2006 005 647

## Beschreibung

Die Erfindung betrifft eine hydraulische oder pneumatische Steuerungseinrichtung eines automatisierten Schaltgetriebes, mit mindestens zwei Stelleinrichtungen, die jeweils als ein doppeltwirkender Stellzylinder mit zwei durch einen Kolben getrennten Druckräumen ausgebildet sind, wobei die Druckräume der Stellzylinder jeweils über ein Steuerungsventil selektiv mit einer Druckleitung oder mit einer Drucklosleitung verbindbar sind, und die Druckleitung über ein Hauptabschaltventil selektiv mit einer Hauptdruckleitung verbindbar oder gegen diese absperrbar ist. Die Erfindung betrifft zudem ein Verfahren zur Ansteuerung von Steuerungselementen einer derartigen hydraulischen oder pneumatischen Steuerungseinrichtung.

Mit einem Druckmittel, wie Hydrauliköl oder Druckluft, arbeitende Steuerungseinrichtungen der eingangs genannten Art sind in unterschiedlichen Ausführungsformen bekannt und werden bei automatisierten Getrieben von Kraftfahrzeugen zur Durchführung von Gangschaltungen verwendet. Bei Personenkraftwagen sind diese Steuerungseinrichtungen zumeist hydraulisch wirksam ausgebildet, wogegen sie bei größeren Nutzfahrzeugen, wie Lastkraftwagen und Omnibussen, wegen der dort vorhandenen Druckluftanlagen vorwiegend pneumatisch wirksam ausgebildet sind.

Eine derartige Steuerungseinrichtung ist beispielsweise in weitgehend identischer Ausführung in der DE 199 31 973 A1 und in der DE 101 31 853 A1 beschrieben. Dort ist jeweils eine Pumpe vorgesehen, durch die ein Druckmittel aus einem Vorratsbehälter bzw. Ölsumpf in eine Hauptdruckleitung förderbar ist. Über ein als 2/2-Wege-Magnetschaltventil ausgebildetes Hauptabschaltventil ist eine Druckleitung selektiv mit der Hauptdruckleitung verbindbar oder gegen diese absperrbar. An diese Druckleitung sind mehrere als 3/2-Wege-Magnetschaltventile ausgebildete Steuerungsventile angeschlossen, die jeweils paarweise einer Stelleinrichtung zugeordnet sind. Die Stelleinrichtungen sind jeweils als ein doppeltwirkender Stellzylinder mit zwei durch einen Kolben getrennten Druckräumen ausgebildet, wobei die Druckräume über Anschlussleitungen jeweils mit einem der zugeordneten Steuerungsventile verbunden sind und über diese selektiv mit der Druckleitung oder mit einer Drucklosleitung verbindbar sind.

Abhängig von der Ausbildung der getriebeinternen Schaltbetätigungseinrichtung können die Stelleinrichtungen die Funktion eines Wählstellers zur Wahl einer von mehreren Schaltgassen oder eines Gangstellers zum Ein- und Auslegen der Gänge der betreffenden Schaltgasse bzw. ausschließlich die Funktion eines Gangstellers haben. Erfolgt die Schaltbetätigung über eine axial verschiebbare und drehbare Schaltwelle, so ist eine als Wählsteller wirksame Stelleinrichtung erforderlich, durch welche die Schaltwelle zur Wahl der Schaltgasse z.B. über einen Schaltfinger in formschlüssigen Eingriff mit der Schaltstange der betreffenden Schaltgasse bringbar ist. Durch eine andere, als Schaltsteller wirksame Stelleinrichtung erfolgt dann über die Schaltwelle das Ein- und Auslegen der zugeordneten Gänge durch eine Axialverschiebung der betreffenden Schaltstange, die über eine Schaltgabel in Eingriff mit einer Schaltmuffe steht.

Möglich ist jedoch auch eine unmittelbare Betätigung der Schaltstangen oder von Schaltschwingen durch jeweils eine zugeordnete Stelleinrichtung. In diesem Fall sind alle Stelleinrichtungen als Gangsteller wirksam, und die Wahl der Schaltgasse erfolgt ausschließlich über die Ansteuerung der Gangsteller. Die erforderliche Anzahl der Stelleinrichtungen entspricht in diesem Fall der Anzahl der Schaltgassen, so dass bei einem einfachen automatisierten Schaltgetriebe mit sechs Vorwärtsgängen und einem Rückwärtsgang mindestens vier Stelleinrichtungen erforderlich sind.

Ausgehend von dem letztgenannten Beispiel eines einfachen automatisierten Schaltgetriebes mit unmittelbar von den Stelleinrichtungen betätigbaren Schaltstangen oder Schaltschwingen treten Gangschaltungen mit hohem Druckmittelbedarf und Gangschaltungen mit geringem Druckmittelbedarf auf. Bei einer Schaltung zwischen zwei Gängen, die derselben Schaltgasse zugeordnet sind, also die über dieselbe Schaltstange oder Schaltschwinge ein- bzw. ausgelegt werden, wird nur eine einzige Stelleinrichtung benutzt, was einen relativ niedrigen Druckmittelbedarf zur Folge hat.

Erfolgt dagegen eine Schaltung zwischen zwei Gängen, die unterschiedlichen Schaltgassen zugeordnet sind, also die über verschiedene Schaltstangen oder Schaltschwingen ein- bzw. ausgelegt werden, so werden zwei Stelleinrichtungen benutzt, welches einen höheren Druckmittelbedarf bedingt. Ein noch höherer Druckmittelbedarf besteht bei einer so genannten Mehrfachschaltung, bei der in kurzer zeitlicher Abfolge mehrere Gangschaltungen hintereinander ablaufen.

Das Hauptabschaltventil hat nun die Aufgabe, in Schaltpausen im geschlossenen Zustand die Druckleitung mit den angeschlossenen Steuerungsventilen und den Stelleinrichtungen von der Hauptdruckleitung zu trennen. Hierdurch sind dann die Steuerungsventile und die Stelleinrichtungen von dem relativ hohen Hauptdruck in der Hauptdruckleitung geschützt, wodurch sonst mögliche Leckageverluste und gegebenenfalls unerwünschte Bewegungen der Stelleinrichtungen vermieden werden.

In Schaltphasen wird das Hauptabschaltventil dagegen geöffnet und damit die Druckleitung mit der Hauptdruckleitung verbunden, um die Steuerungsventile und die über diese anzusteuernden Stelleinrichtungen mit einem ausreichend hohen Druck sowie einem ausreichend hohen Volumenstrom zu versorgen. Demzufolge ist das Hauptabschaltventil auf einen Volumenstrom ausgelegt, der unter Berücksichtigung von verschleißbedingten Leckagen dem größten Volumenstrom entspricht, der bei einem Schaltvorgang auftreten kann. Daher ist das Hauptabschaltventil üblicherweise relativ groß dimensioniert, wodurch es vergleichsweise teuer und störungsanfällig ist, aufgrund einer ausgeprägten Hysterese schlechte Steuerungseigenschaften aufweist, und bei der üblichen Ausbildung als Magnetschaltventil einen relativ hohen Steuerstrom erfordert. Hinzu kommt, dass bei einer Störung an dem Hauptabschaltventil die gesamte Steuerungseinrichtung ausfällt und somit die Schaltfähigkeit des zugeordneten Schaltgetriebes nicht mehr gegeben ist.

Um diese Nachteile zumindest teilweise zu vermeiden, ist es auch bekannt, anstelle eines großen Magnetschaltventils in einer so genannten Boosteranordnung ein entsprechend großes druckgesteuertes Hauptabschaltventil zwischen der Hauptdruckleitung und der Druckleitung anzuordnen, das über ein kleineres, an die Hauptdruckleitung angeschlossenes und als Magnetschaltventil ausgebildetes Vorschaltventil mit einem Steuerdruck beaufschlagbar ist. Aufgrund des schnellen Ansprechverhaltens und des geringen erforderlichen Steuerstroms des Vorschaltventils ist die Steuerbarkeit dieser Ventilanordnung zumindest teilweise verbessert. Wegen der benötigten zwei Ventile sind aber die Kosten dieser Anordnung erhöht und deren Betriebssicherheit ist zumindest nicht verbessert, da nun schon eine Störung an einem der beiden Ventile, dem druckgesteuerten Hauptabschaltventil und dem elektrisch gesteuerten Vorschaltventil, zu einem Ausfall der Steuerungseinrichtung führen kann.

Aus der gattungsgemäßen Schrift EP 1 150 040 A2 ist außerdem eine hydraulische Schaltung für ein automatisiertes Doppelkupplungsgetriebe für Kraftfahrzeuge bekannt, mit einem Hochdruckkreis mit wenigstens einem Aktuator für das Vorgelegegetriebe und/oder die Kupplungen, einem Niederdruckkreis und einer ersten Verstellpumpe.

Der Erfindung liegt daher die Aufgabe zugrunde, eine Steuerungseinrichtung der eingangs genannten Art vorzuschlagen, die bei einfachem und kostengünstigem Aufbau bessere Steuerungseigenschaften und eine höhere Betriebssicherheit aufweist. Außerdem soll ein Verfahren zur Ansteuerung von Steuerungselementen einer derartigen Steuerungseinrichtung angegeben werden.

Die Lösung der Aufgaben wird erreicht durch eine hydraulische oder pneumatische Steuerungseinrichtung eines automatisierten Schaltgetriebes, die Stelleinrichtungen mit Stellzylindern mit Druckräumen umfaßt, wobei die Druckräume der Stellzylinder jeweils über ein Steuerungsventil mit einer Druckleitung verbindbar sind, und bei der die Druckleitung über ein Hauptabschaltventil selektiv mit einer Hauptdruckleitung verbindbar oder gegen diese absperrbar ist. Bei dieser Steuerungseinrichtung ist gemäß der Erfindung außerdem vorgesehen, dass mindestens ein weiteres Hauptabschaltventil parallel zu dem ersten Hauptabschaltventil zwischen der Hauptdruckleitung und der Druckleitung angeordnet ist.

Durch diesen Aufbau können die mindestens zwei Hauptabschaltventile klein dimensioniert werden, welches aufgrund eines schnelleren Ansprechverhaltens dieser Hauptabschaltventile zu einer verbesserten Steuerbarkeit der Steuerungseinrichtung führt. Des Weiteren ist die Betriebssicherheit der Steuerungseinrichtung deutlich erhöht, da bei einer Störung an einem der Hauptabschaltventile die Betriebsfähigkeit der Steuerungseinrichtung durch die verbleibenden nicht gestörten Hauptabschaltventile, wenn auch mit eingeschränkter Dynamik, weiterhin gewährleistet ist.

Alle Hauptabschaltventile sind bevorzugt als direkt ansteuerbare 2/2Wege-Magnetschaltventile ausgebildet und somit direkt ansteuerbar sowie preisgünstig verfügbar.

Ebenso sind alle Hauptabschaltventile zweckmäßig baugleich ausgeführt, wodurch günstige Beschaffungs- und Logistikkosten erzielbar sind. Des Weiteren ist die Steuerung der Hauptabschaltventile hierdurch vereinfacht, da alle Hauptabschaltventile nach denselben Kennlinien gesteuert werden können.

Auch ist es vorteilhaft, wenn die Hauptabschaltventile von einem zugeordneten Steuergerät unabhängig voneinander ansteuerbar sind, da dann eine individuelle Ansteuerung der Hauptabschaltventile, z.B. in Abhängigkeit des aktuellen Druckmittelbedarfs, möglich ist.

Hierzu ist es auch von Vorteil, wenn die Hauptabschaltventile derart dimensioniert sind, dass die Deckung eines größtmöglichen Druckmittelbedarfs durch das Öffnen aller Hauptabschaltventile und die Deckung eines kleineren Druckmittelbedarfs durch das Öffnen nur eines der Hauptabschaltventile erzielbar ist.

Zur bedarfsabhängigen Steuerung der Hauptabschaltventile kann auch ein an die Druckleitung angeschlossener Drucksensor verwendet werden, durch den der Druck p_dls und/oder der Druckgradient (dp/dt)_dls in der Druckleitung ermittelbar ist.

Die Lösung der zweiten Aufgabe ist realisiert durch ein Verfahren zur Ansteuerung von Steuerungselementen einer hydraulischen oder pneumatischen Steuerungseinrichtung eines automatisierten Schaltgetriebes, die Stelleinrichtungen mit Stellzylindern mit Druckräumen umfaßt, wobei die Druckräume der Stellzylinder jeweils über ein Steuerungsventil mit einer Druckleitung verbindbar sind, und die Druckleitung über ein Hauptabschaltventil selektiv mit einer Hauptdruckleitung verbindbar oder gegen diese absperrbar ist. Verfahrensgemäß ist vorgesehen, dass bei Vorliegen mehrerer zwischen der Hauptdruckleitung und der Druckleitung parallel angeordneter Hauptabschaltventile der Druckmittelbedarf der Stelleinrichtungen und der zugeordneten Steuerungsventile ermittelt wird, und dass die Hauptabschaltventile in Abhängigkeit des ermittelten Druckmittelbedarfs angesteuert werden.

Hierzu kann vorgesehen sein, dass der Druckmittelbedarf vor einem Schaltvorgang abgeschätzt wird, und dass dann für die Dauer des Schaltvorgangs bei höherem Druckmittelbedarf mehrere Hauptabschaltventile geöffnet werden, wogegen bei niedrigerem Druckmittelbedarf nur eines der Hauptabschaltventile oder ein Teil der Hauptabschaltventile geöffnet wird.

Dabei werden bei Schaltvorgängen mit einer Öffnung nur eines Hauptabschaltventils oder nur eines Teils der Hauptabschaltventile zur Vermeidung eines vorzeitigen Verschleißes eines der Hauptabschaltventile zweckmäßig über mehrere derartige Schaltvorgänge wechselweise alle Hauptabschaltventile in einer vorab festgelegten Reihenfolge benutzt.

Dabei ist zu berücksichtigen, dass ein vorzeitiger Verschleiß eines der Hauptabschaltventile sowohl bei überdurchschnittlicher Nutzung durch Reibverschleiß an Dichtungen und Dichtflächen als auch bei unterdurchschnittlicher Nutzung, also bei langen Stillstandszeiten, durch Festkleben von Dichtungen an Dichtflächen und durch deren Losreißen bei der Inbetriebnahme erfolgen kann. Durch eine statistisch in etwa gleich häufige Nutzung aller Hauptabschaltventile können beide Verschleißarten minimiert und in etwa gleich verteilt werden, so dass dadurch auch die Lebensdauer der gesamten Steuerungseinrichtung erhöht wird.

Alternativ zu der genannten Vorgehensweise ist es auch möglich, dass zu Beginn eines Schaltvorgangs zunächst nur eines der Hauptabschaltventile geöffnet wird, dass während des Schaltvorgangs über einen an die Druckleitung angeschlossenen Drucksensor der Druck p_dls und/oder der Druckgradient (dp/dt)_dls in der Druckleitung ermittelt wird, und dass bei einer Unterschreitung eines vorab festgelegten Mindestdruckes p_min durch den sensierten Druck p_dls und/oder eines vorab festgelegten Mindestdruckgradienten (dpldt)_min durch den sensierten Druckgradienten (dp/dt)_dls sukzessiv jeweils solange ein weiteres Hauptabschaltventil geöffnet wird, bis der Mindestdruck p_min und/oder der Mindestdruckgradient (dp/dt)_min in der Druckleitung erreicht oder überschritten ist.

Auch bei Schaltvorgängen mit einer derartigen seriellen Öffnung der Hauptabschaltventile kann ein vorzeitiger Verschleiß eines der Hauptabschaltventile vermieden werden, indem über mehrere derartige Schaltvorgänge wechselweise alle Hauptabschaltventile in einer vorab festgelegten Reihenfolge benutzt werden, also jeweils ein anderes Hauptabschaltventil zuerst geöffnet wird.

Des Weiteren ist es vorteilhaft, wenn Störungen an den Hauptabschaltventilen diagnostiziert werden, und bei einer erkannten Störung an einem der Hauptabschaltventile nachfolgend nur noch die ungestörten Hauptabschaltventile angesteuert und betätigt werden. Hierdurch können Fehlfunktionen durch einen undefinierten Zustand des gestörten Hauptabschaltventils vermieden werden.

Zur Verdeutlichung der Erfindung ist der Beschreibung eine Zeichnung beigefügt.
In diesen zeigt:
- Fig. 1: einen schematischen Schaltplan einer erfindungsgemäßen Steuerungseinrichtung,
- Fig. 2: einen schematischen Schaltplan einer ersten Steuerungseinrichtung gemäß dem Stand der Technik und
- Fig. 3: einen schematischen Schaltplan einer bekannten zweiten Steuerungseinrichtung.

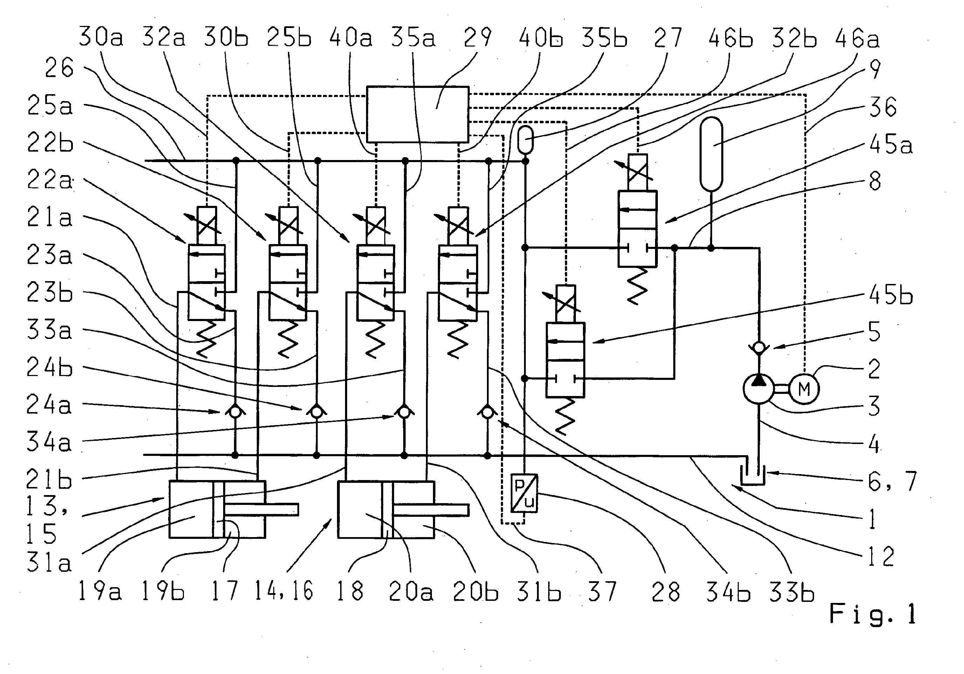

In den Fig. 1, 2 und 3 ist jeweils eine hydraulische oder pneumatische Steuerungseinrichtung 1, 1', 1" eines automatisierten Schaltgetriebes eines Kraftfahrzeugs mit folgenden Gemeinsamkeiten abgebildet:

Durch eine von einem Motor 2 angetriebene Pumpe 3 ist ein Druckmittel, wie Hydrauliköl oder Druckluft, über eine Saugleitung 4 und ein Rückschlagventil 5 aus einem Vorratsbehälter 6 bzw. Ölsumpf 7 in eine Hauptdruckleitung 8 förderbar. Zum Ausgleich von Druckschwankungen ist ein Druckspeicher 9 an die Hauptdruckleitung 8 angeschlossen.

Die Steuerungseinrichtungen 1, 1', 1" weisen mehrere Stelleinrichtungen auf, von denen in den Fig. 1, 2, und 3 jeweils nur zwei Stelleinrichtungen 13 und 14 abgebildet sind. Die Stelleinrichtungen 13 und 14, bei denen es sich abhängig von der Bauart der getriebeinternen Schaltbetätigungseinrichtung entweder um einen Wählsteller und einen Schaltsteller oder nur um Schaltsteller handeln kann, sind jeweils als ein doppeltwirkender Stellzylinder 15, 16 ausgebildet, die jeweils zwei durch einen Kolben 17, 18 getrennte Druckräume 19a, 19b bzw. 20a, 20b aufweisen.

Die Druckräume 19a, 19b der ersten Stelleinrichtung 13 stehen jeweils über eine Verbindungsleitung 21a, 21b mit dem Ausgang eines als 3/2-Wege-Magnetschaltventil ausgebildeten Steuerungsventils 22a, 22b in Verbindung. Durch das zugeordnete erste Steuerungsventil 22a ist der erste Druckraum 19a der ersten Stelleinrichtung 13 selektiv über eine Rückflussleitung 23a und ein Rückschlagventil 24a mit der Drucklosleitung 12 oder über eine Zuflussleitung 25a mit einer Druckleitung 26 verbindbar.

Ebenso ist der zweite Druckraum 19b der ersten Stelleinrichtung 13 durch das zugeordnete zweite Steuerungsventil 22b selektiv über eine Rückflussleitung 23b und ein Rückschlagventil 24b mit der Drucklosleitung 12 oder über eine Zuflussleitung 25b mit der Druckleitung 26 verbindbar.

In gleicher Art und Weise stehen die Druckräume 20a und 20b der zweiten Stelleinrichtung 14 jeweils über eine Verbindungsleitung 31a, 31b mit dem Ausgang eines als 3/2-Wege-Magnetschaltventil ausgebildeten Steuerungsventils 32a, 32b in Verbindung. Durch das zugeordnete erste Steuerungsventil 32a ist der erste Druckraum 20a der zweiten Stelleinrichtung 14 selektiv über eine Rückflussleitung 33a und ein Rückschlagventil 34a mit der Drucklosleitung 12 oder über eine Zuflussleitung 35a mit der Druckleitung 26 verbindbar. Ebenso ist der zweite Druckraum 20b der zweiten Stelleinrichtung 14 durch das zugeordnete zweite Steuerungsventil 32b selektiv über eine Rückflussleitung 33b und ein Rückschlagventil 34b mit der Drucklosleitung 12 oder über eine Zuflussleitung 35b mit der Druckleitung 26 verbindbar.

Zum Ausgleich von Druckschwankungen ist ein Druckspeicher 27 an die Druckleitung 26 angeschlossen. Ebenfalls ist an die Druckleitung 26 ein Drucksensor 28 angeschlossen, der, wie auch in der DE 199 31 973 A1 vorgesehen, zur Messung, oder, wie in der DE 101 31 853 A1 zur rechnerischen Ermittlung der Betätigungsdrücke in den Druckräumen 19a, 19b bzw. 20a, 20b der Stelleinrichtungen 13 und 14 verwendet werden kann.

Des Weiteren ist ein vorzugsweise elektronisch ausgebildetes Steuergerät 29 vorgesehen, dass über elektrische Steuerleitungen 30a, 30b, 40a, 40b mit den Steuerungsventilen 21 a, 21 b, 31 a, 31 b der Stelleinrichtungen, über eine weitere elektrische Steuerleitung 36 mit dem Motor 2, und über eine elektrische Sensorleitung 37 mit dem Drucksensor 28 in Verbindung steht.

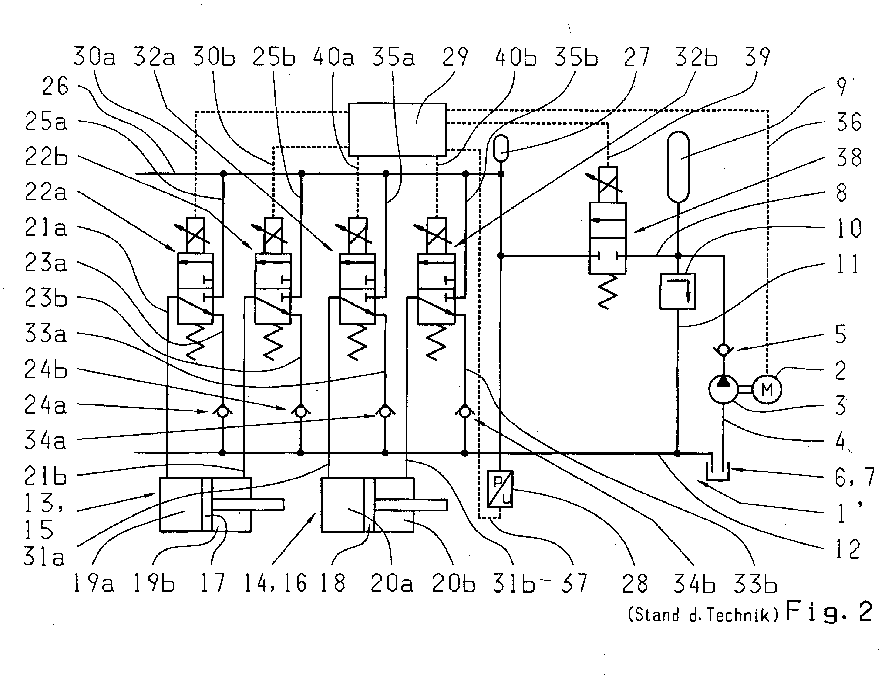

In einer im Prinzip aus der DE 199 31 973 A1 und der DE 101 31 853 A1 bekannten Ausführungsform der Steuerungseinrichtung 1' nach Fig. 2 ist ein einziges Hauptabschaltventil 38 zwischen der Hauptdruckleitung 8 und der Druckleitung 26 angeordnet. Das Hauptabschaltventil 38 ist als ein 2/2-Wege-Magnetschaltventil ausgebildet und steht über eine elektrische Steuerleitung 39 mit dem Steuergerät 29 in Verbindung.

Das Hauptabschaltventil 38 hat die Aufgabe, die an die Druckleitung 26 angeschlossenen Steuerungsventile 22a, 22b, 32a, 32b außerhalb von Schaltvorgängen zur Vermeidung von Leckageverlusten von der Hauptdruckleitung 8 zu trennen und diese während Schaltvorgängen für die Betätigung der Stelleinrichtungen 13, 14 zur Versorgung mit einem ausreichenden Druck und einem ausreichenden Volumenstrom mit der Hauptdruckleitung 8 zu verbinden. Da vorliegend nur ein einziges Hauptabschaltventil 38 vorhanden ist, ist dieses auf den größtmöglichen Druckmittelbedarf der Stelleinrichtungen 13, 14 ausgelegt und somit relativ groß dimensioniert, welches relativ schlechte Steuerungseigenschaften, wie ein verzögertes Ansprechverhalten und einen hohen erforderlichen Steuerstrom, relativ hohe Teilekosten sowie bei den meisten Schaltvorgängen eine unnötig hohe mechanische Belastung der Steuerungsventile 22a, 22b, 32a, 32b zur Folge hat. Zudem kann durch eine Störung an dem Hauptabschaltventil 38 die gesamte Steuerungseinrichtung 1' ausfallen.

Zur Begrenzung des Hauptdruckes steht die Hauptdruckleitung 8 über ein Druckbegrenzungsventil 10 und eine Rückflussleitung 11 mit einer Drucklosleitung 12 in Verbindung, die in den Vorratsbehälter 6 bzw. Ölsumpf 7 führt.

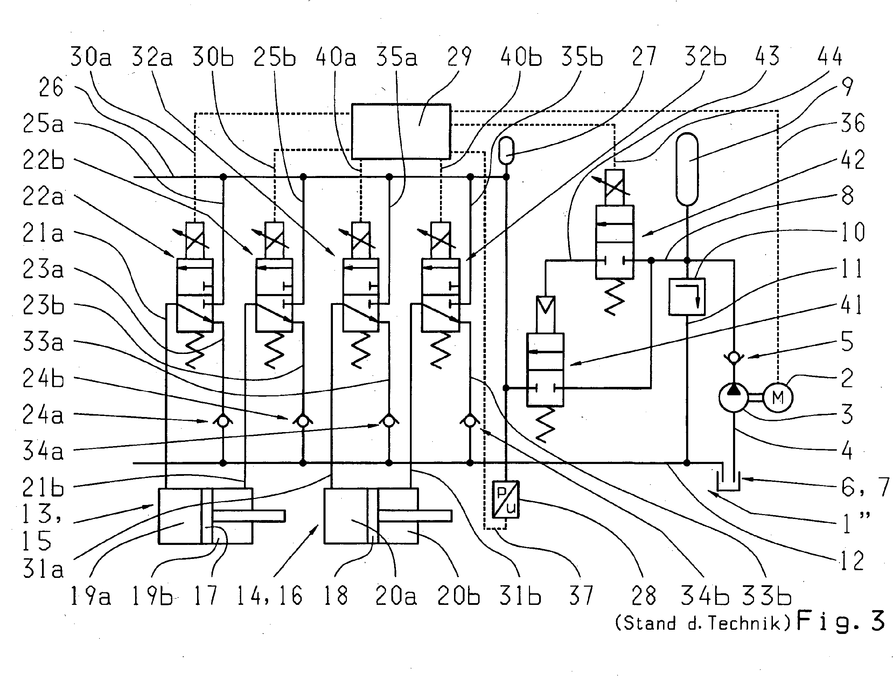

In einer weiteren bekannten Ausführungsform der Steuerungseinrichtung 1" nach Fig. 3 ist ebenfalls ein einziges Hauptabschaltventil 41 zwischen der Hauptdruckleitung 8 und der Druckleitung 26 angeordnet, das aber im Unterschied zu der vorbeschriebenen Ausführung gemäß Fig. 2 nun als ein druckgesteuertes 2/2-Wege-Schaltventil ausgebildet ist. Zur Ansteuerung des Hauptabschaltventils 41 ist ein Vorschaltventil 42 vorgesehen, welches als ein 2/2-Wege-Magnetschaltventil ausgebildet ist, dessen Eingang an die Hauptdruckleitung 8 und dessen Ausgang über eine Drucksteuerungsleitung 43 an den Steuerungseingang des Hauptabschaltventils 41 angeschlossen ist, und das über eine elektrische Steuerleitung 44 mit dem Steuergerät 29 in Verbindung steht.

Das als Vorschaltventil 42 wirksame Magnetschaltventil ist deutlich kleiner dimensioniert als das Hauptabschaltventil 38 der vorbeschriebenen Ausführungsform gemäß Fig. 2, wodurch die Steuerungseigenschaften und die Zuverlässigkeit des Magnetschaltventils 42 verbessert sind. Ein Kostenvorteil und eine Verbesserung der Betriebssicherheit wird durch die Verwendung der beiden Schaltventile 41, 42 dagegen nicht erreicht.

Im Gegensatz zu den vorbeschriebenen bekannten Ausführungen gemäß Fig. 2 und Fig. 3 sind in der erfindungsgemäßen Steuerungseinrichtung 1 nach Fig. 1 mehrere, beispielhaft zwei Hauptabschaltventile 45a, 45b parallel geschaltet zwischen der Hauptdruckleitung 8 und der Druckleitung 26 angeordnet. Die Hauptabschaltventile 45a und 45b sind jeweils als ein 2/2-Wege-Magnetschaltventil ausgebildet und stehen jeweils über eine elektrische Steuerleitung 46a, 46b mit dem Steuergerät 29 in Verbindung, so dass sie unabhängig voneinander ansteuerbar sind.

Die Hauptabschaltventile 45a und 45b sind zweckmäßig relativ klein dimensioniert, welches ein besseres Ansprechverhalten zur Folge hat. Zudem sind die Hauptabschaltventile 45a und 45b vorzugsweise baugleich ausgeführt und derart ausgelegt, dass ein geringerer Druckmittelbedarf der Stelleinrichtungen 13, 14 durch das Öffnen nur eines Hauptabschaltventils (45a oder 45b) und ein größerer Druckmittelbedarf der Stelleinrichtungen 13, 14 durch das Öffnen beider Hauptabschaltventile 45a, 45b gedeckt werden kann. Hierdurch ist eine bedarfsgerechte Ansteuerung der Hauptabschaltventile 45a, 45b möglich, wodurch die mechanischen Belastungen der Steuerungsventile 22a, 22b, 32a, 32b sowie die Leckageverluste während der Schaltvorgänge deutlich reduziert werden.

Zur bedarfsgerechten Ansteuerung kann auch der Drucksensor 28 genutzt werden, so dass in Schaltphasen eine serielle Öffnung der Hauptabschaltventile 45a, 45b in Abhängigkeit des Druckes p_dls und/oder des Druckgradienten (dp/dt)_dls in der Druckleitung 26 möglich ist.

Bei einem Ausfall eines der Hauptabschaltventile 45a oder 45b bleibt durch das nicht gestörte Hauptabschaltventil 45b oder 45a die Funktionstüchtigkeit der Steuerungseinrichtung 1 erhalten, wenn auch mit reduzierter Dynamik, also verlängerten Schaltzeiten des Schaltgetriebes. Somit ist durch die Parallelschaltung mehrerer Hauptabschaltventile 45a, 45b auch die Betriebssicherheit der erfindungsgemäßen Steuerungseinrichtung 1 gegenüber den bekannten Ausführungen deutlich erhöht.

### Bezugszeichen

- 1: Steuerungseinrichtung
- 1': Steuerungseinrichtung
- 1": Steuerungseinrichtung
- 2: Motor
- 3: Pumpe
- 4: Saugleitung
- 5: Rückschlagventil
- 6: Vorratsbehälter
- 7: Ölsumpf
- 8: Hauptdruckleitung
- 9: Druckspeicher
- 10: Druckbegrenzungsventil
- 11: Rückflussleitung
- 12: Drucklosleitung
- 13: Stelleinrichtung
- 14: Stelleinrichtung
- 15: Doppeltwirkender Stellzylinder
- 16: Doppeltwirkender Stellzylinder
- 17: Kolben
- 18: Kolben
- 19a: Druckraum
- 19b: Druckraum
- 20a: Druckraum
- 20b: Druckraum
- 21a: Verbindungsleitung
- 21 b: Verbindungsleitung
- 22a: Steuerungsventil
- 22b: Steuerungsventil
- 23a: Rückflussleitung
- 23b: Rückflussleitung
- 24a: Rückschlagventil
- 24b: Rückschlagventil
- 25a: Zuflussleitung
- 25b: Zuflussleitung
- 26: Druckleitung
- 27: Druckspeicher
- 28: Drucksensor
- 29: Steuergerät
- 30a: Steuerleitung
- 30b: Steuerleitung
- 31a: Verbindungsleitung
- 31b: Verbindungsleitung
- 32a: Steuerungsventil
- 32b: Steuerungsventil
- 33a: Rückflussleitung
- 33b: Rückflussleitung
- 34a: Rückschlagventil
- 34b: Rückschlagventil
- 35a: Zuflussleitung
- 35b: Zuflussleitung
- 36: Steuerleitung
- 37: Sensorleitung
- 38: Hauptabschaltventil
- 39: Steuerleitung
- 40a: Steuerleitung
- 40b: Steuerleitung
- 41: Hauptabschaltventil
- 42: Vorschaltventil
- 43: Drucksteuerleitung
- 44: Steuerleitung
- 45a: Hauptabschaltventil
- 45b: Hauptabschaltventil
- 46a: Steuerleitung
- 46b: Steuerleitung

## Patentansprüche

1. Verfahren zur Ansteuerung von Steuerungselementen einer hydraulischen oder pneumatischen Steuerungseinrichtung (1) eines automatisierten Schaltgetriebes, die Stelleinrichtungen mit Stellzylindern (15, 16) mit Druckräumen (19a, 19b; 20a, 20b) umfaßt, wobei die Druckräume (19a, 19b; 20a, 20b) der Stellzylinder (15, 16) jeweils über ein Steuerungsventil (22a, 22b; 32a, 32b) mit einer Druckleitung (26) verbindbar sind, und die Druckleitung (26) über ein Hauptabschaltventil (45a) selektiv mit einer Hauptdruckleitung (8) verbindbar oder gegen diese absperrbar ist,**dadurch gekennzeichnet, dass** bei Vorliegen mehrerer zwischen der Hauptdruckleitung (8) und der Druckleitung (26) parallel angeordneter Hauptabschaltventile (45a, 45b) der Druckmittelbedarf der Stelleinrichtungen (13, 14) und der zugeordneten Steuerungsventile (22a, 22b; 32a, 32b) ermittelt wird, dass die Hauptabschaltventile (45a, 45b) in Abhängigkeit des ermittelten Druckmittelbedarfs angesteuert werden, dass der Druckmittelbedarf vor einem Schaltvorgang abgeschätzt wird, und dass für die Dauer des Schaltvorgangs bei höherem Druckmittelbedarf mehrere Hauptabschaltventile (45a, 45b) geöffnet werden, wogegen bei niedrigerem Druckmittelbedarf nur eines der Hauptabschaltventile (45a oder 45b) oder ein Teil der Hauptabschaltventile geöffnet wird.

2. Verfahren nach Anspruch 1, **dadurch gekennzeichnet, dass** bei Schaltvorgängen mit einer Öffnung nur eines Hauptabschaltventils (45a oder 45b) oder nur eines Teils der Hauptabschaltventile (45a, 45b) über mehrere derartige Schaltvorgänge wechselweise alle Hauptabschaltventile (45a, 45b) in einer vorab festgelegten Reihenfolge benutzt werden.

3. Verfahren nach Anspruch 1, **dadurch gekennzeichnet, dass** zu Beginn eines Schaltvorgangs zunächst nur eines der Hauptabschaltventile (45a oder 45b) geöffnet wird, dass während des Schaltvorgangs über einen an die Druckleitung (26) angeschlossenen Drucksensor (28) der Druck p_dls und/oder der Druckgradient (dp/dt)_dls in der Druckleitung (26) ermittelt wird, und dass bei einer Unterschreitung eines vorab festgelegten Mindestdruckes p_min durch den sensierten Druck p_dls und/oder eines vorab festgelegten Mindestdruckgradienten (dp/dt)_min durch den sensierten Druckgradienten (dp/dt)_dls sukzessiv jeweils solange ein weiteres Hauptabschaltventil (45b oder 45a) geöffnet wird, bis der Mindestdruck p_min und/oder der Mindestdruckgradient (dp/dt)_min in der Druckleitung (26) erreicht oder über-schritten ist.

4. Verfahren nach Anspruch 3, **dadurch gekennzeichnet, dass** bei Schaltvorgängen mit einer seriellen Öffnung der Hauptabschaltventile (45a, 45b) über mehrere derartige Schaltvorgänge wechselweise alle Hauptabschaltventile (45a, 45b) in einer vorab festgelegten Reihenfolge benutzt werden.

5. Verfahren nach einem der Ansprüche 1 bis 4, **dadurch gekennzeichnet, dass** Störungen an den Hauptabschaltventilen (45a, 45b) diagnostiziert werden, und dass bei einer erkannten Störung an einem der Hauptabschaltventile (45a oder 45b) nachfolgend nur noch die ungestörten Hauptabschaltventile (45b oder 45a) benutzt werden.

## Claims

1. Method for actuating control elements of a hydraulic or pneumatic control device (1) of an automated transmission which comprises actuating devices with actuating cylinders (15, 16) with pressure spaces (19a, 19b; 20a, 20b), wherein the pressure spaces (19a, 19b; 20a, 20b) of the actuating cylinders (15, 16) can each be connected to a pressure line (26) via a control valve (22a, 22b; 32a, 32b), and the pressure line (26) can be connected selectively to a main pressure line (8) via a main deactivation valve (45a) or can be blocked off with respect to said main pressure line (8), **characterized in that** when a plurality of main deactivation valves (45a, 45b) which are arranged in parallel between the main pressure line (8) and the pressure line (26) are present the pressure medium requirement of the actuating devices (13, 14) and the assigned control valves (22a, 22b; 32a, 32b) is determined, **in that** the main deactivation valves (45a, 45b) are actuated as a function of the determined pressure medium requirement, **in that** the pressure medium requirement is switched off before a shifting process, and **in that** a plurality of main deactivation valves (45a, 45b) are opened for the duration of the shifting process when there is a relatively high pressure medium requirement, whereas when there is a relatively low pressure medium requirement only one of the main deactivation valves (45a or 45b) or some of the main deactivation valves is/are opened.

2. Method according to Claim 1, **characterized in that** in the case of shifting processes with opening of just one main deactivation valve (45a or 45b) or of just some of the main deactivation valves (45a, 45b) all of the main deactivation valves (45a, 45b) are used alternately in a previously defined sequence over a plurality of such shifting processes.

3. Method according to Claim 1, **characterized in that** at the start of a shifting process at first just one of the main deactivation valves (45a or 45b) is opened, **in that** during the shifting process the pressure p_dls and/or the pressure gradient (dp/dt)_dls in the pressure line (26) is determined by means of a pressure sensor (28) which is connected to the pressure line (26), and **in that** when a previously defined minimum pressure p_min is undershot by the sensed pressure p_dls and/or a previously defined minimum pressure gradient (dp/dt)_min is undershot by the sensed pressure gradient (dp/dt)_dls in each case a further main deactivation valve (45b or 45a) is successively opened until the minimum pressure p_min and/or the minimum pressure gradient (dp/dt)_min in the pressure line (26) is reached or exceeded.

4. Method according to Claim 3, **characterized in that** in the case of shifting processes with serial opening of the main deactivation valves (45a, 45b) all the main deactivation valves (45a, 45b) are used alternately in a previously defined sequence over a plurality of such shifting processes.

5. Method according to one of Claims 1 to 4, **characterized in that** faults on the main deactivation valves (45a, 45b) are diagnosed, and **in that** when a fault is detected on one of the main deactivation valves (45a or 45b) only the main deactivation valves (45b or 45a) which are without faults are then subsequently used.

## Revendications

1. Procédé de commande d'éléments de commande d'un dispositif de commande (1) hydraulique ou pneumatique d'une boîte de vitesses automatique, lequel comporte des dispositifs d'actionnement comprenant des cylindres d'actionnement (15, 16) pourvus d'espaces de pression (19a, 19b ; 20a, 20b), les espaces de pression (19a, 19b ; 20a, 20b) des cylindres d'actionnement (15, 16) pouvant être reliés à chaque fois par le biais d'une soupape de commande (22a, 22b ; 32a, 32b) à une conduite de pression (26), et la conduite de pression (26) pouvant être reliée de manière sélective, par le biais d'une soupape d'arrêt principale (45a), à une conduite de pression principale (8) ou pouvant être fermée par rapport à celle-ci, **caractérisé en ce qu'**en présence de plusieurs soupapes d'arrêt principales (45a, 45b) disposées parallèlement entre la conduite de pression principale (8) et la conduite de pression (26), les besoins en fluide sous pression des dispositifs d'actionnement (13, 14) et des soupapes de commande (22a, 22b ; 32a, 32b) associées sont déterminés, **en ce que** les soupapes d'arrêt principales (45a, 45b) sont commandées en fonction des besoins en fluide sous pression déterminés, **en ce que** les besoins en fluide sous pression sont évalués avant une opération de commutation, et **en ce qu'**en cas de besoins plus élevés en fluide sous pression, plusieurs soupapes d'arrêt principales (45a, 45b) sont ouvertes pendant la durée de l'opération de commutation, tandis qu'en cas de besoins plus faibles en fluide sous pression, seulement l'une des soupapes d'arrêt principales (45a ou 45b) ou une partie des soupapes d'arrêt principales est/sont ouverte(s).

2. Procédé selon la revendication 1, **caractérisé en ce qu'**en cas d'opérations de commutation avec une ouverture de seulement une soupape d'arrêt principale (45a ou 45b) ou de seulement une partie des soupapes d'arrêt principales (45a, 45b), toutes les soupapes d'arrêt principales (45a, 45b) sont utilisées en alternance suivant une séquence préalablement déterminée, par le biais de plusieurs opérations de commutation de ce type.

3. Procédé selon la revendication 1, **caractérisé en ce qu'**au début d'une opération de commutation, tout d'abord seulement l'une des soupapes d'arrêt principales (45a ou 45b) est ouverte, **en ce que** pendant l'opération de commutation, la pression p_dls et/ou le gradient de pression (dp/dt)_dls dans la conduite de pression (26) est/sont déterminé(e)(s) par le biais d'un capteur de pression (28) raccordé à la conduite de pression (26), et **en ce que**, lorsque la pression détectée p_dls passe en dessous d'une pression minimale p_min préalablement déterminée et/ou lorsque le gradient de pression détecté (dp/dt)_dls passe en dessous d'un gradient de pression minimal (dp/dt)_min préalablement déterminé, une soupape d'arrêt principale (45b ou 45a) supplémentaire est à chaque fois successivement ouverte jusqu'à ce que la pression minimale p_min et/ou le gradient de pression minimal (dp/dt)_min dans la conduite de pression (26) soi(en)t atteint(e)(s) ou dépassé(e)(s).

4. Procédé selon la revendication 3, **caractérisé en ce qu'**en cas d'opérations de commutation avec une ouverture en série des soupapes d'arrêt principales (45a, 45b), toutes les soupapes d'arrêt principales (45a, 45b) sont utilisées en alternance suivant une séquence préalablement déterminée, par le biais de plusieurs opérations de commutation de ce type.

5. Procédé selon l'une quelconque des revendications 1 à 4, **caractérisé en ce que** des dysfonctionnements des soupapes d'arrêt principales (45a, 45b) sont diagnostiqués, et **en ce que** lorsqu'un dysfonctionnement de l'une des soupapes d'arrêt principales (45a ou 45b) est identifié, seules les soupapes d'arrêt principales (45b ou 45a) non défaillantes ne sont encore utilisées par la suite.
